# EUROPEAN PATENT APPLICATION

(11) **EP 2 816 480 A1**
(43) Date of publication of application: **24.12.2014**
(21) Application number: 12868810.8
(22) Date of filing: 13.02.2012
(51) Int. Cl.: G06F 11/30

(54) **PROCESSOR SYSTEM**

(71) Applicant: Mitsubishi Electric Corporation, Tokyo 100-8310 (JP)
(72) Inventor: TOKUNAGA, Toshiro, Tokyo 100-8310 (JP); OCHIAI, Shinichi, Tokyo 100-8310 (JP)
(74) Representative: Hopkin, Tobias J.B.
(86) International application number: PCT/JP2012/053236
(87) International publication number: WO 2013/121502

(57) **Abstract**

A memory 225 stores the log information of respective cores 116 to 118. If an abnormality occurs in any core, each core writes the log information, being stored in the memory 225, thereof into a backup storage device 126. Thus, the log information of cores other than the core in which the abnormality occurs can be saved in the backup storage device 116.

## Description

### Technical Field

The present invention relates to a processing system that includes a plurality of processor units.

In this specification, the explanation will be presented mainly on a multicore CPU in which a plurality of processing systems (CPU cores; to be merely referred to as cores hereinafter) are arranged in one CPU (Central Processing Unit) package. The explanation in this specification will also apply to a multi-CPU system or multiprocessor system in which a plurality of CPUs (single-core CPUs or multicore CPUs) are arranged.

Namely, the "core" in the multicore CPU to be described hereinafter can be an individual "CPU" in the multi-CPU system or an individual "processor" in the multi-processor system.

The term "processor unit" is employed as a concept that includes any one of "core" in the multicore CPU, "CPU" in the multi-CPU system, and "processor" in the multiprocessor system.

### Background Art

An RAS method (RAS: Reliability, Availability, Serviceability)) is an abnormality dealing method of detecting an abnormality in one core of a multicore CPU with a watchdog timer (to be abbreviated as WDT hereinafter) and saving log information (to be merely referred to as log as well hereinafter) on a memory into a backup storage device.

The WDT is a hardware time measuring instrument of a computer.

According to the RAS method, if the main program falls into a false state such as hang-up and a regular watchdog operation (WDT reset operation) is not carried out, an exception process (WDT exception) is executed.

The exception process is executed mainly to reset the hung-up system to restore it to the normal operation. The exception process is also executed when forcibly stopping the system, or when turning on the system after the system has been turned off.

With the RAS method having a function of saving information or the like useful for debugging a problem that has caused a failure, into a medium, the WDT performs a more complicated process.

For example, if the log information saving process initiated by timeout of the WDT is not completed within a certain period of time, the WDT resets the system reliably at the lapse of a predetermined delay time regardless of whether or not the log information is saved.

It is a built-in system that uses the WDT the most. Sometimes the WDT is incorporated in a microcontroller.

A method is also proposed which applies a WDT not only to a system having a single CPU but also to a system having a plurality of CPUs such as a multicore CPU or a multiprocessor.

Patent Literature 1 discloses a method for a multiprocessor system, where a certain processor notifies its abnormal operation state to another processor by WDT exception, and this another processor notifies an interrupt that triggers an abnormality recovery operation to the processor in the abnormal operation state. If the processor in the abnormal operation state does not accept the interrupt, this another processor resets the processor which is in the abnormal operation state.

### Citation List

### Patent Literature

Patent Literature 1: JP 2000-311155

### Summary of Invention

### Technical Problem

When an abnormality occurs in a certain processor, log information of another processor in which no abnormality occurs serves as a significant clue in failure analysis and system recovery, in addition to log information of the processor in which the abnormality occurs.

With the technique of Patent Literature 1, although the log information of the processor in which an abnormality occurs is saved in a backup storage device, the log information of another processor in which no abnormality occurs is not saved.

The present invention has been made in view of this situation, and mainly aims to enable, if an abnormality occurs in any processor unit, to save log information of another processor unit in which no abnormality occurs.

### Solution to Problem

A processor system according to the present invention includes:
a plurality of processor units;
a first storage device which stores log information of each processor unit; and
a second storage device which is different from the first storage device,
wherein each processor unit writes log information of the processor unit, being stored in the first storage device, into the second storage device when an abnormality occurs in any of the processor units.

### Advantageous Effects of Invention

According to the present invention, if an abnormality occurs in any processor unit, each processor unit writes the log information of its own in the first storage device, into the second storage device.

Therefore, the log information of a processor unit in which no abnormality occurs can be saved.

### Brief Description of Drawings

Fig. 1 shows a configuration example of a CPU board according to Embodiment 1.
Fig. 2 explains an operation example of a normal state according to Embodiment 1.
Fig. 3 explains an operation example of an abnormal state according to Embodiment 1.
Fig. 4 is a flowchart showing an operation example of the abnormal state according to Embodiment 1.
Fig. 5 is a flowchart showing the operation example of the abnormal state according to Embodiment 1.
Fig. 6 is a flowchart showing the operation example of the abnormality state according to Embodiment 1.
Fig. 7 shows a configuration example of a CPU board according to Embodiment 2.
Fig. 8 explains an operation example of a normal state according to Embodiment 2.
Fig. 9 explains an operation example of an abnormal state according to Embodiment 2.
Fig. 10 is a flowchart showing an operation example of the abnormal state according to Embodiment 2.
Fig. 11 is a flowchart showing the operation example of the abnormal state according to Embodiment 2.
Fig. 12 is a flowchart showing the operation example of the abnormality state according to Embodiment 2.
Fig. 13 is a flowchart showing the operation example of the abnormal state according to Embodiment 2.
Fig. 14 shows the relation among hypervisors, OSs, cores, and applications according to Embodiment 2.

### Description of Embodiments

Embodiments 1 and 2 below explain a configuration in which when an abnormality occurs in any core, the log information of another core in which no abnormality occurs can be saved in a backup storage device.

Embodiments 1 and 2 also explain a configuration in which even when the abnormality dealing function (RAS function) of an abnormality occurrence core in which an abnormality occurs does not operate normally, the log information of the abnormality occurrence core can be saved in the backup storage device.

According to the conventional technique, in an abnormality dealing method (RAS method) of detecting an abnormality in one core of a multicore CPU with a WDT, saving the log on a memory in a backup storage device, and resetting the board eventually, if the RAS function on the abnormality occurrence core does not operate normally, the log of the abnormality occurrence core at the time the abnormality occurs cannot be saved, which is a problem.

For example, according to the technique of Patent Literature 1, the abnormality of one processor detected by the WDT is notified to another processor, and an abnormality recovery operation for the abnormality occurrence processor is triggered via this another processor. This abnormality recovery operation is carried out by the abnormality occurrence processor. If the abnormal recovery operation does not function normally, the log of the abnormality occurrence processor cannot be saved in the backup storage device.

In view of this, Embodiments 1 and 2 will explain a configuration in which even if the RAS function of an abnormality occurrence core does not operate normally, the log of the abnormality occurrence core can be saved in the backup storage device, and a configuration in which the log of another core in which no abnormality occurs can be saved in the backup storage device.

### Embodiment 1.

### [Embodiment 1: Explanation on Configuration]

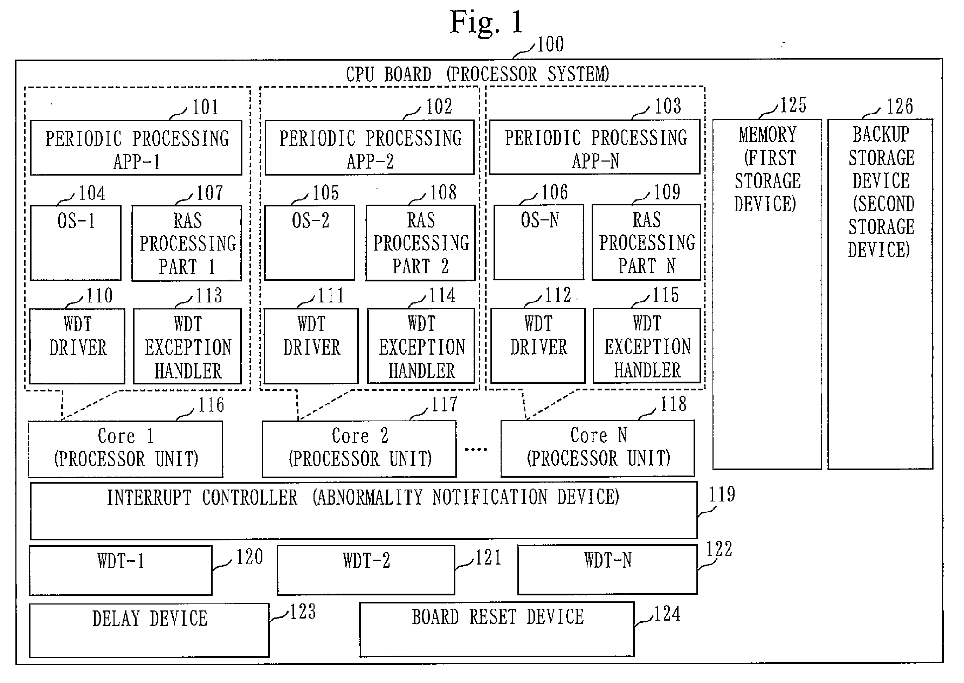

Fig. 1 is a block diagram showing a configuration example of a CPU board 100 according to this embodiment.

The hardware configuration elements of the CPU board 100 are: N of cores 116 to 118, N of WDTs 120 to 122 corresponding to the respective cores, a memory 125, a backup storage device 126, an interrupt controller 119, a delay device 123, and a board reset device 124.

Each of the cores 116 to 118 is an example of a processor unit.

The memory 125 is an example of a first storage device.

The backup storage device 126 is an example of a second storage device.

The interrupt controller 119 is an example of an abnormality detection device.

The software configuration elements of the cores 116 to 118 are: applications (periodic processing APPs) 101 to 103 which reset the WDTs periodically, OSs (Operating Systems) 104 to 106, RAS processing parts 107 to 109, WDT drivers 110 to 112, and WDT exception handlers 113 to 115.

In place of the WDTs 120 to 122, an external WDT may be employed which has a system of performing a timer operation and notifying occurrence of an abnormality in the CPU.

In the following, it is explained that each WDT is set so as to notify the interrupt controller 119 of WDT exceptions the number of which is equal to all the cores upon occurrence of WDT timeout. Alternatively, instead of the WDTs 120 to 122 hardware that performs the same operation may be employed.

### [Embodiment 1: Explanation on Setting]

Hardware setting for the WDTs 120 to 122 and for the interrupt controller 119 in Embodiment 1 will be explained.

Each WDT is set so as to notify the interrupt controller 119 of WDT exceptions the number of which is equal to all the cores upon occurrence of WDT timeout.

The interrupt controller 119 is set so as to notify WDT exception to all the cores by round robin upon reception of the WDT exceptions.

### [Embodiment 1: Operation Outline]

The operation will be explained now.

In Embodiment 1, when WDT exception occurs, abnormality occurrence is notified to the RAS processing parts of all the cores sequentially. The RAS processing part of each core saves the log of its own core into the backup storage device 126.

If the RAS processing part of the abnormality occurrence core does not operate normally, the RAS processing part of another core that operates normally substitutionally saves the log of the abnormality occurrence core.

The operation outline according to this embodiment is as follows.

i) As described before in [Embodiment 1: Explanation on Setting], when WDT timeout occurs, a WDT notifies the interrupt controller 119 of WDT exceptions the number of which is equal to all the cores.

More specifically, in response to one WDT timeout occurrence, the WDT outputs WDT exception occurrence notices the number of which is equal to the number of the cores (N of WDT exception occurrence notices), to the interrupt controller 119.

Upon reception of the WDT exception occurrence notices from the WDT, the interrupt controller 119 notifies abnormality occurrence to the respective cores by round robin sequentially.

Hence, for one WDT timeout occurrence, abnormality occurrence is notified to all the cores sequentially.

ii) The RAS processing part of each core that has received the abnormality occurrence notice saves the log of its own core into the backup storage device 126.

iii) The RAS processing part of each core that has received the abnormality occurrence notice can recognize the core whose WDT has outputted the WDT exception occurrence notice, from the type of WDT exception.

The RAS processing parts of cores other than the abnormality occurrence core determine whether or not saving of the log of the abnormality occurrence core into the backup storage device 126 has been started.

If saving of the log of the abnormality occurrence core has not been started yet, the RAS processing parts of the cores other than the abnormality occurrence core save the log of the abnormality occurrence core into the backup storage device 126.

### [Embodiment 1: Operation in Detail]

The operation of this embodiment will be explained in detail.

### (Operation in Detail: Operation in Normal State)

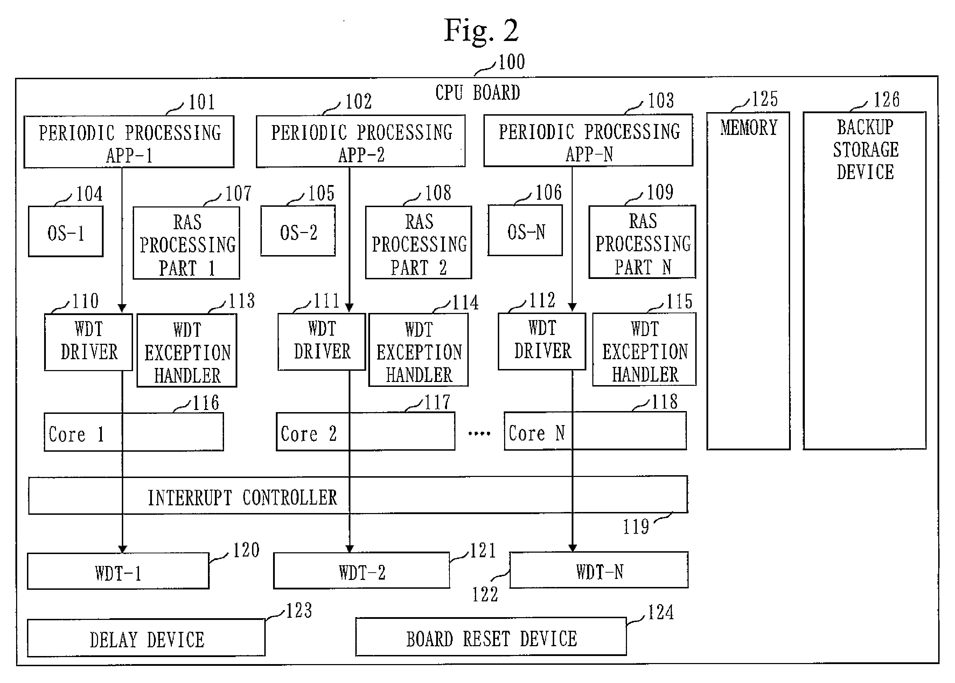

The operation in the normal state will be explained with reference to Fig. 2.

The periodic processing APP-1 (101) of the core 1 (116) carries out WDT reset periodically.

The periodic processing APP-1 (101) resets the WDT-1 (120) via the WDT driver 110.

In a normal state, WDT exception does not occur because WDT reset is carried out before WDT timeout occurs.

The same process (arrows of 102 → 111 → 121 and 103 → 112 → 122) is carried out in the core 2 (117) and the core N (118).

### (Operation in Detail: Operation in Abnormal State)

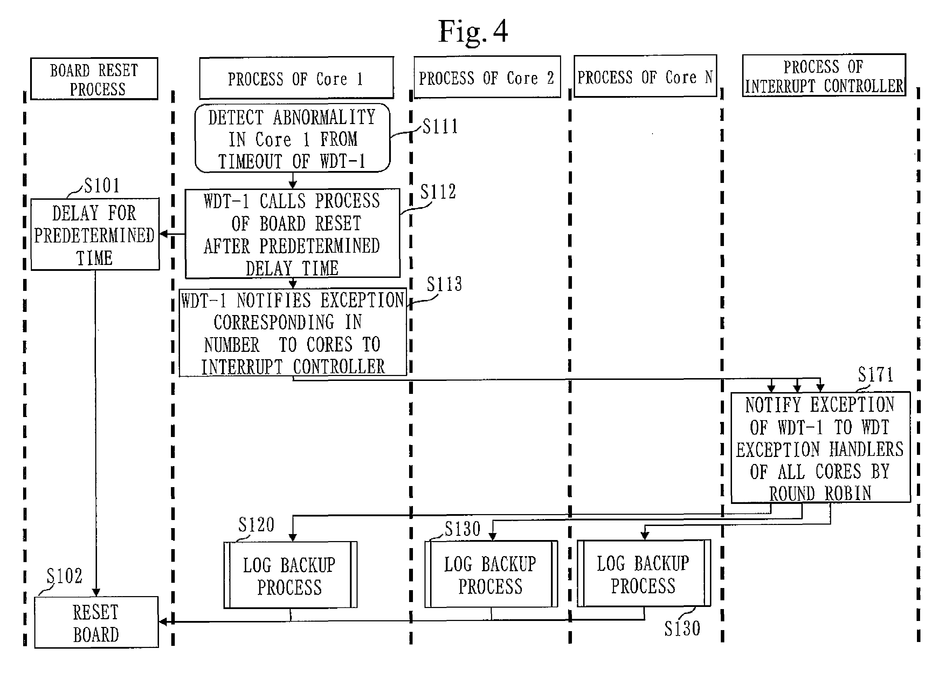

The operation in the abnormal state will be explained with reference to the flowcharts of Figs. 4, 5, and 6.

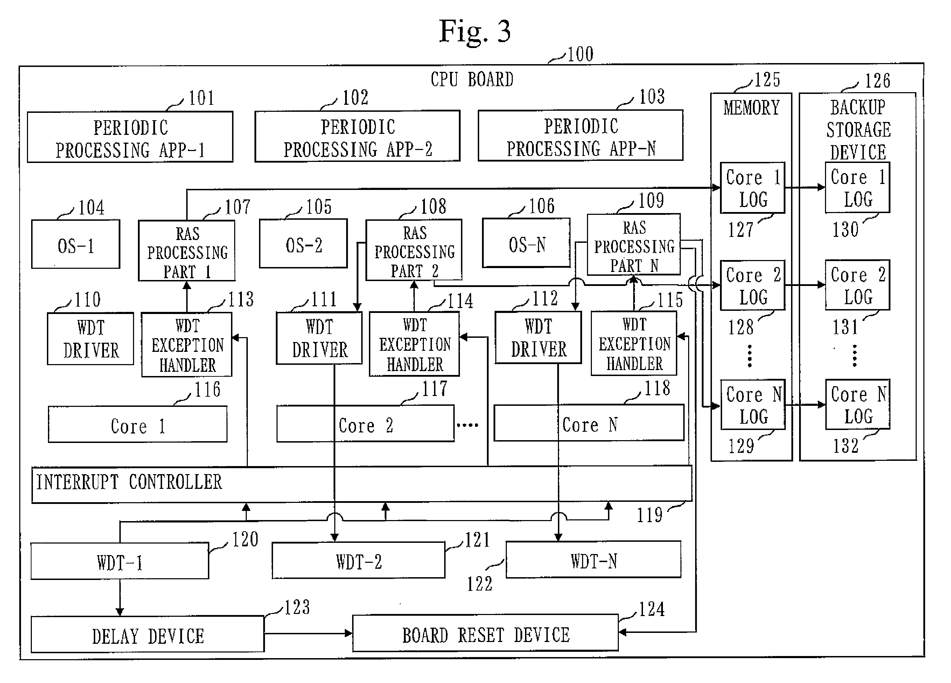

The process flow at this state in the block diagram will be supplementally explained using Fig. 3.

An explanation will be made through an example in which an abnormality occurs in the core 1 (116) and WDT exception occurs in the WDT-1 (120).

### In S111, WDT timeout occurs.

In S112, the WDT-1 (120) calls a process implementing board reset after a predetermined delay time (an arrow from 120 to 123 in Fig. 3).

In S101, after the predetermined delay time, board reset process S102 is called (an arrow from 123 to 124 in Fig. 3).

This delay time should be sufficiently longer than a time required for the RAS processing part to complete saving the logs of all the cores into the backup storage device 126.

In S113, the WDT-1 (120) notifies WDT exception corresponding in number to the cores to the interrupt controller 119 (an arrow from 120 to 119 in Fig. 3).

In S171, the interrupt controller 119 receives as input the WDT exception notices the number of which is equal to all the cores from the WDT-1 (120) and notifies exception of the WDT-1 (120) to the WDT exception handlers of the respective cores by round robin (arrows from 119 to 113, 114, and 115 in Fig. 3).

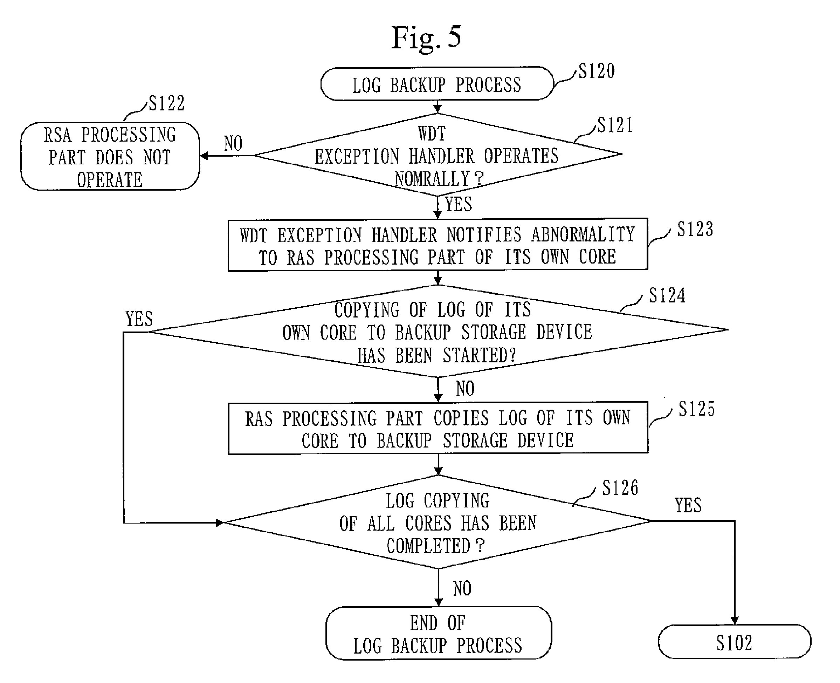

An operation (S120: log backup process) after exception notification to the core 1 (116) will now be described with reference to Fig. 5.

In S121, if the WDT exception handler 113 of the abnormality occurrence core (core 1) does not operate normally and the RAS processing part 1 (107) of the abnormality occurrence core is not executed, the log of the abnormality occurrence core cannot be saved in the backup storage device 126 by the RAS processing part 1 (107) of the abnormality occurrence core (S122).

In S 121, if the WDT exception handler 113 of the abnormality occurrence core operates normally, then in S123, the WDT exception handler 113 notifies an abnormality to the RAS processing part 1 (107) of its own core (an arrow from 113 to 107 in Fig. 3).

In S124, the RAS processing part 1 (107) checks whether or not copying of the log of the abnormality occurrence core to the backup storage device 126 has been started. If copying has not been started yet, the log of the abnormality occurrence core is copied to the backup storage device in S125 (arrows from 107 to 127 and 130 in Fig. 3).

Note that whether or not copying of the log of each core to the backup storage device 126 has been started yet can be checked using a shared resource such as a semaphore and a flag on the memory 125.

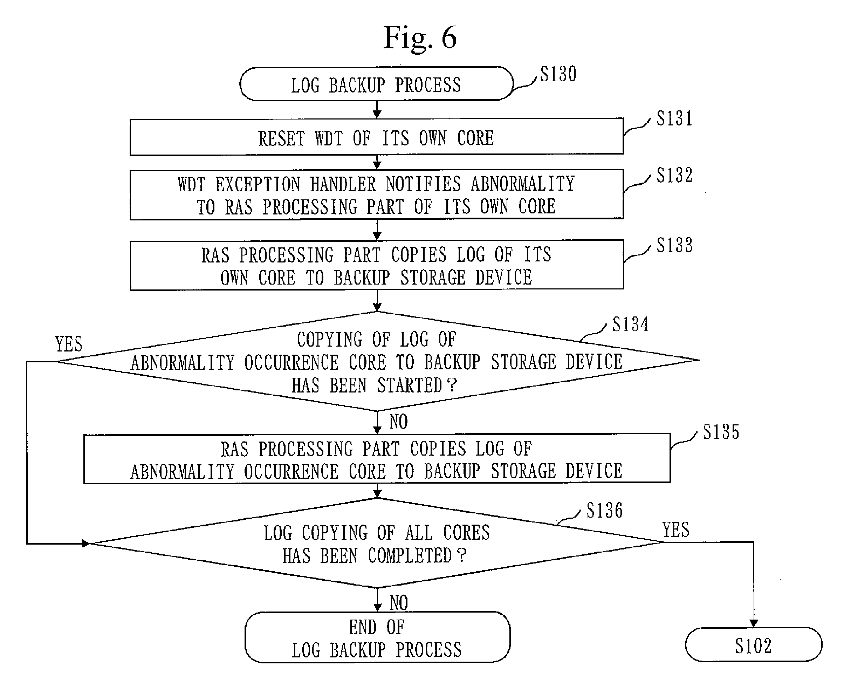

Since the interrupt controller 119 notifies occurrence of WDT exception to the WDT exception handlers of the respective cores by round robin, as mentioned above, there is a case where prior to the RAS processing part 1 (107) of the abnormality occurrence core (core 1), the RAS process of another core has started copying the log of the abnormality occurrence core (S135 in Fig. 6).

For this reason, in S124, the RAS processing part 1 (107) checks whether or not the RAS processing part of another core has started copying of the log.

Subsequently, in S126, the RAS processing part 1 (107) checks whether or not log copying of all the cores has been completed. If there is any core log copying of which has not been completed yet, the process of the RAS processing part 1 (107) completes.

If log copying of all the cores has been completed in S125, the RAS processing part 1 (107) calls the board reset process of S102 (Fig. 3 shows an example in which the RAS processing part of the core N verifies completion of every copying; an arrow from 109 to 124).

Note that whether or not log copying of all the cores has been completed yet can be checked using the shared resource such as the semaphore and the flag on the memory 125.

The board reset process of the board reset device 124 in Fig. 3 is called after the delay of the delay device 123 as well. However, board reset carried out at the time completion of all the RAS processes is verified is advantageous because of the sooner board rest which is done without waiting for the delay.

An operation (S130: log backup process) after exception notification to the core 2 (117) and the core N (118) will be explained with reference to Fig. 6.

The following explanation will be made on the process of the core 2 (117). The same process is carried out by the core N (118) as well.

In S131, the RAS processing part 2 (108) of the core 2 (117) resets the WDT-2 (121) via the WDT driver 111 (arrows from 108 to 121 via 111 in Fig. 3).

This process aims to prevent WDT timeout from occurring in a core other than the abnormality occurrence core during the RAS process based on reception of an exception occurrence notice of the WDT-1 (120).

In S 132, the WDT exception handler 114 of the core 2 (117) notifies an abnormality to the RAS processing part 2 (108) of the core 2 (117) (an arrow from 114 to 108 in Fig. 3).

In S133, the RAS processing part 2 (108) copies the log of the core 2 (117) to the backup storage device 126 (arrows from 108 to 128 and 131 in Fig. 3).

In S 134, the RAS processing part 2 (108) checks whether or not copying of the log of the abnormality occurrence core (core 1) to the backup storage device 126 has been started. If copying has not been started yet, then in S135, the RAS processing part 2 (108) copies the log of the abnormality occurrence core to the backup storage device 126 (substitutionally practiced along an arrow from 127 to 130 in Fig. 3 by the RAS processing part 2 (108) of the core 2).

Hence, the RAS processing part of a core other than the abnormality occurrence core can substitutionally copy the log of the abnormality occurrence core to the backup storage device 126.

In S136, the RAS processing part 2 (108) checks whether or not every log copying has been completed. If there is any core log copying of which has not been completed yet, the process of the RAS processing part 2 (108) completes.

If log copying of all the cores has been completed in S 136, the RAS processing part 2 (108) calls the board reset process of S102.

### [Embodiment 1: Effect]

As described above, an abnormality occurrence is notified to the RAS processing parts of all the cores sequentially. The RAS processing part of each core saves the log of its own core into the backup storage device.

Therefore, log information of a core other than the abnormality occurrence core can be saved in the backup storage device and used for failure analysis of the entire board.

Even if the RAS processing part of the abnormality occurrence core does not operate normally, another core that operates normally substitutionally saves the log information of the abnormality occurrence core, so that the log information of the abnormality occurrence core can be saved in the backup storage device.

In this embodiment, the WDTs and the interrupt controller are set employing an existing technique. Thus, the system according to this embodiment can be realized easily and at a low cost.

### Embodiment 2.

In Embodiment 1 described above, WDT exceptions the number of which is equal to all the cores, are generated once. An example will be explained where a hypervisor exists and WDT exception received by one core is notified to the other cores via the hypervisor, thereby notifying WDT abnormality to all the cores.

The hypervisor in this embodiment signifies a hypervisor for a built-in device, namely software that executes a plurality of OSs on a multicore CPU simultaneously while linking the OSs and achieving the execution environment protection.

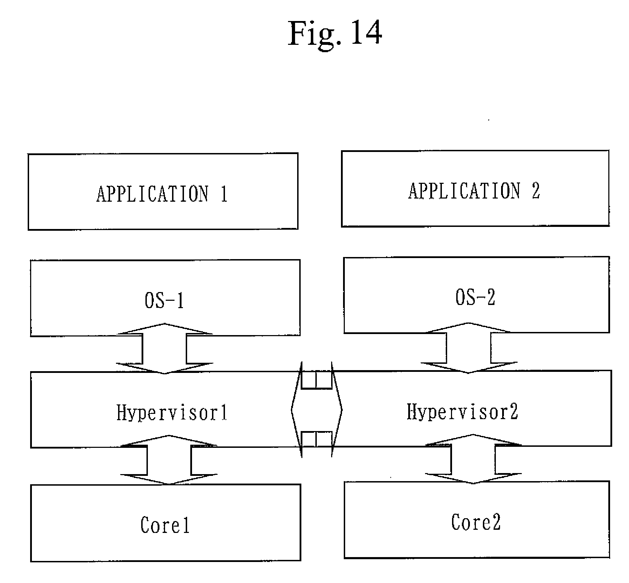

Fig. 14 is a simplified block diagram of a built-in hypervisor in a 2-core CPU.

As shown in Fig. 14, a hypervisor 1 operates in a core 1 and links the core 1 with an OS 1, while a hypervisor 2 operates in a core 2 and links the core 2 with an OS 2.

The hypervisor 1 and the hypervisor 2 are linked to each other.

### [Embodiment 2: Explanation on Configuration]

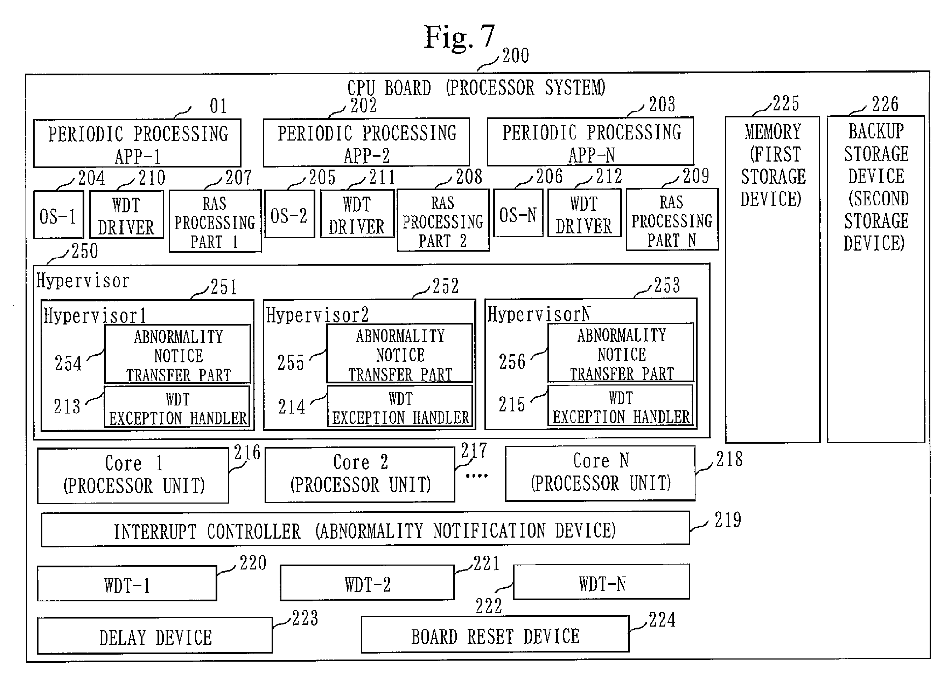

Fig. 7 is a block diagram showing a configuration example of a CPU board 200 according to this embodiment.

The hardware configuration elements of the CPU board 200 are the same as those explained in Embodiment 1, and their explanation will accordingly be omitted.

Regarding the software configuration elements of cores 216 to 218, the elements with the same names as in Embodiment 1 are the same elements as those explained in Embodiment 1, and their explanation will accordingly be omitted. Only elements that are different from Embodiment 1 will be explained.

Hypervisors (the entire hypervisor is a hypervisor 250, and hypervisors constituting the entire hypervisor and located on the respective cores are hypervisors 251 to 253) exist respectively between the cores and the OSs.

The hypervisors respectively include abnormality notice transfer parts 254 to 256 for notifying abnormality notices received from WDT exception handlers to other hypervisors.

As described in Embodiment 1, in place of WDTs 220 to 222, an external WDT may be employed which has a system of performing a timer operation and notifying occurrence of an abnormality in the CPU.

The hypervisor may be replaced by another means having a system of transferring an abnormality notice between the CPUs.

### [Embodiment 2: Explanation on Setting]

Hardware setting for an interrupt controller 219 in Embodiment 2 will be explained.

The interrupt controller 219 is set so as to notify WDT exception to all the cores by multicast upon reception of the WDT exception occurrence notice.

### [Embodiment 2: Operation Outline]

The operation will be explained now.

In the present embodiment, abnormality occurrence is notified to the RAS processing parts of all the cores by multicast via the hypervisors. The RAS processing part of each core saves the log of its own core into a backup storage device 226.

If the RAS processing part of the abnormality occurrence core does not operate normally, the RAS processing part of another core that operates normally substitutionally saves the log of the abnormality occurrence core.

The operation outline according to this embodiment is as follows.

i) As described before in [Embodiment 2: Explanation on Configuration], the interrupt controller 219, upon being notified of occurrence of WDT exception, notifies an abnormality to all the cores simultaneously by multicast.

ii) The hypervisor exists superior to each core.

Abnormality notices for the respective cores from the interrupt controller 219 are sent to the WDT exception handlers of the respective cores.

The WDT exception handlers receive the abnormality notices on the first-come, first-served basis.

A WDT exception handler which is the first that received the abnormality notices notifies the abnormality to an abnormality notice transfer part in the hypervisor in its own core.

The abnormality notice transfer part notifies the abnormality to the abnormality notice transfer parts in the hypervisors of other cores.

The abnormality notice transfer part in the hypervisor of each core notifies the abnormality to the RAS processing part of its own core. The RAS processing parts of the respective cores start executing the processes simultaneously in parallel.

iii) The RAS processing part of each core that has received the abnormality notice saves the log of its own core into the backup storage device 226.

iv) The RAS processing part of each core that has received the abnormality notice can recognize the core whose WDT has carried out the abnormality notification, from the type of WDT exception.

The RAS processing parts of cores other than the abnormality occurrence core checks whether or not saving of the log of the abnormality occurrence core into the backup storage device 126 has been started.

If saving of the log of the abnormality occurrence core has not been started yet, the RAS processing parts of the cores other than the abnormality occurrence core save the log of the abnormality occurrence core into the backup storage device.

### [Embodiment 2: Operation in Detail]

The operation of this embodiment will be explained in detail.

### (Operation in Detail: Operation in Normal State)

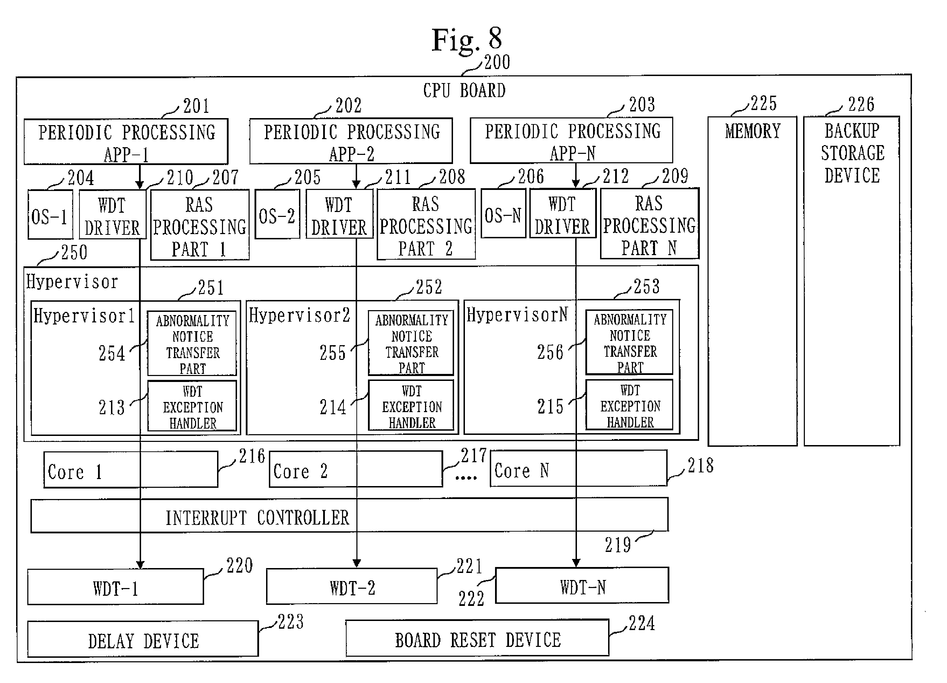

The operation in the normal state will be explained with reference to Fig. 8.

A periodic processing APP-1 (201) of the core 1 (116) carries out WDT reset periodically.

The periodic processing APP-1 (201) resets the WDT-1 (220) via a WDT driver 210.

In a normal state, WDT exception does not occur because WDT reset is carried out before WDT timeout occurs.

The same process (arrows of 202 → 211 → 221 and 203 → 212 → 222) is carried out in the core 2 (217) and the core N (218).

### (Operation in Detail: Operation in Abnormal State)

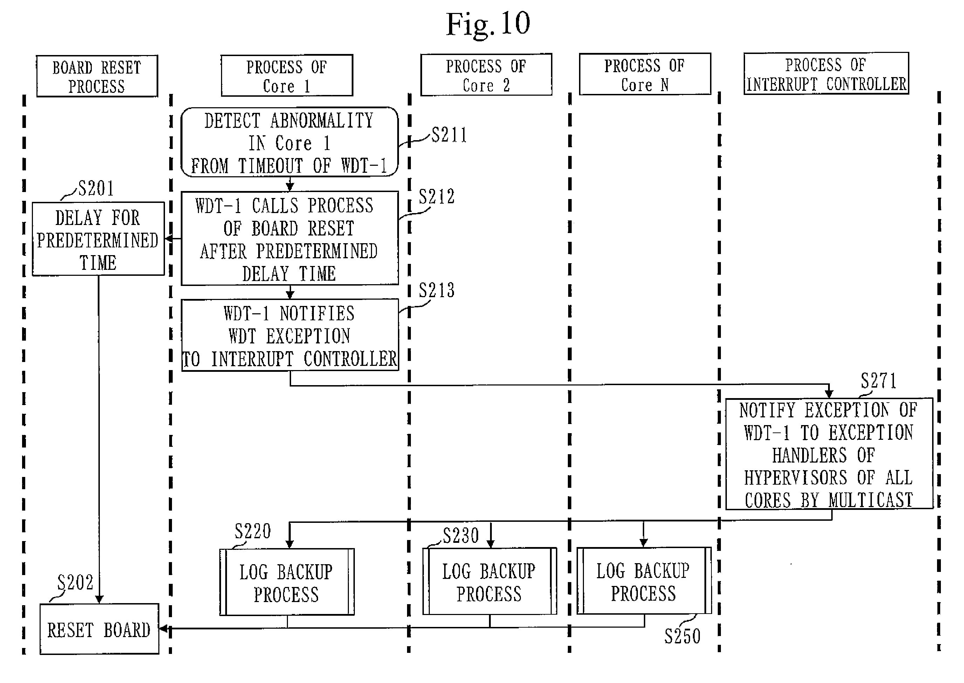

The operation in the abnormal state will be explained with reference to the flowcharts of Figs. 10 to 13.

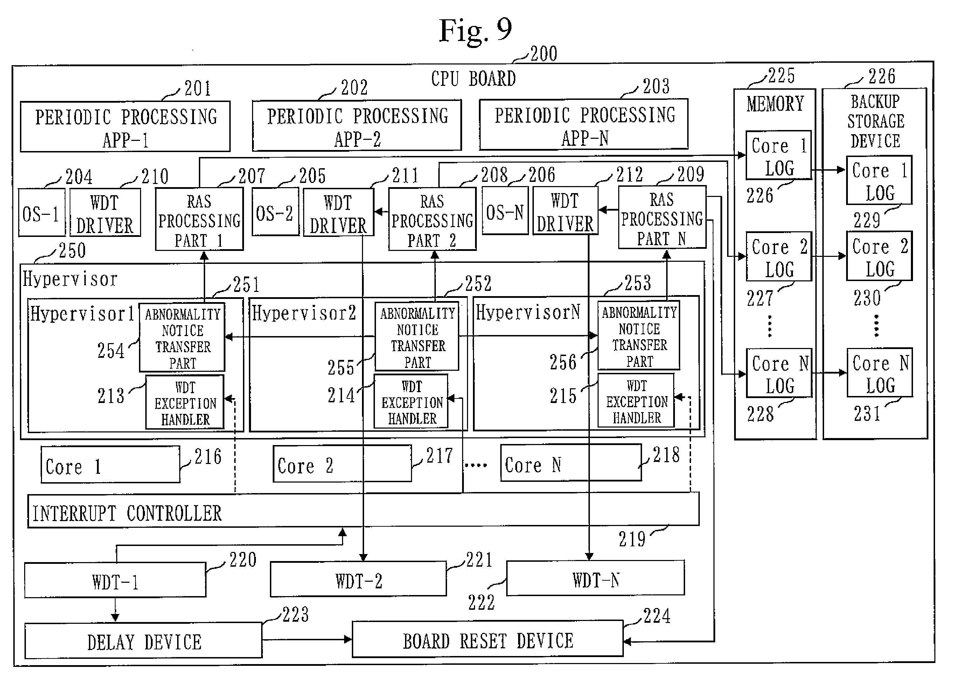

The process flow at this state in the block diagram will be supplementally explained using Fig. 9.

An explanation will be made through an example in which an abnormality occurs in the core 1 (216), WDT exception occurs in the WDT-1 (220), and the first core to receive WDT exception from the interrupt controller 219 is the core 2 (217).

### In S211, WDT timeout occurs.

In S212, the WDT-1 (220) calls a process implementing board reset after a predetermined delay time (an arrow from 220 to 223 in Fig. 9).

In S201, after the predetermined delay time, board reset process S202 is called (an arrow from 223 to 224 in Fig. 9).

This delay time should be sufficiently longer than a time required for the RAS processing part to complete saving the logs of all the cores into the backup storage device 226.

In S213, the WDT-1 (220) notifies WDT exception to the interrupt controller 219 (an arrow from 220 to 219 in Fig. 9).

In S271, the interrupt controller 219 receives WDT exception from the WDT-1 (220) and notifies exception of the WDT-1 (220) to the WDT exception handlers of the respective cores by multicast (arrows from 219 to 213, 214, and 215 in Fig. 9).

In this embodiment, a case will be explained where the core 2 (217) is the first that received WDT exception (hence, in Fig. 9, an arrow from 219 to 213 is a solid-line arrow, and an arrow from 219 to 213 and an arrow from 219 to 215 are dotted-line arrows).

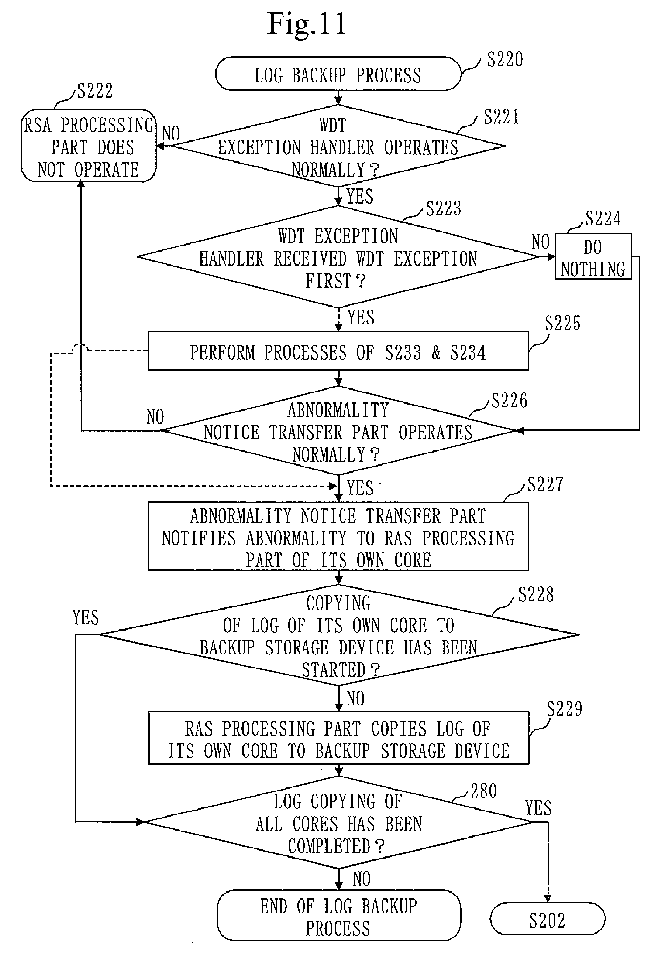

An operation (S220: log backup process) of the core 1 (116) will now be described with reference to Fig. 11.

In S221, if a WDT exception handler 213 of the abnormality occurrence core (core 1) does not operate normally and a RAS processing part 1 (207) of the abnormality occurrence core is not executed, the log of the abnormality occurrence core cannot be saved in the backup storage device 126 by the RAS processing part 1 (207) of the abnormality occurrence core (S222).

In S221, if the WDT exception handler 213 of the abnormality occurrence core operates normally, then in this example, the RAS processing part 1 (207) does nothing in S223 and S224.

In this example, since the core 2 (217) is the first to receive WDT exception, the RAS processing part 1 (207) does nothing.

After this, the core 1 (216) operates after receiving an abnormality notice from a hypervisor (the hypervisor of core 2 in this example) which received WDT exception first (to be described later).

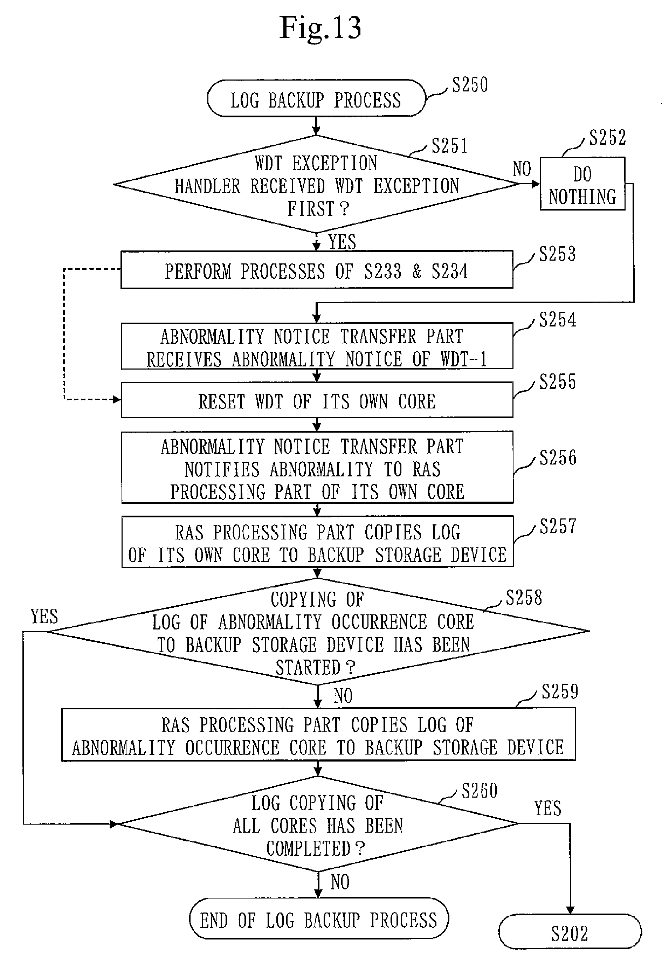

An operation (S250: log backup process) of the core N (218) will be explained with reference to Fig. 13.

In S215, in this example, since the core 2 is the first to receive WDT exception, a RAS processing part N (209) does nothing (S252).

After that, the core N (218) operates after receiving an abnormality notice from a hypervisor (the hypervisor of core 2 in this example) which is the first that received WDT exception (to be described later).

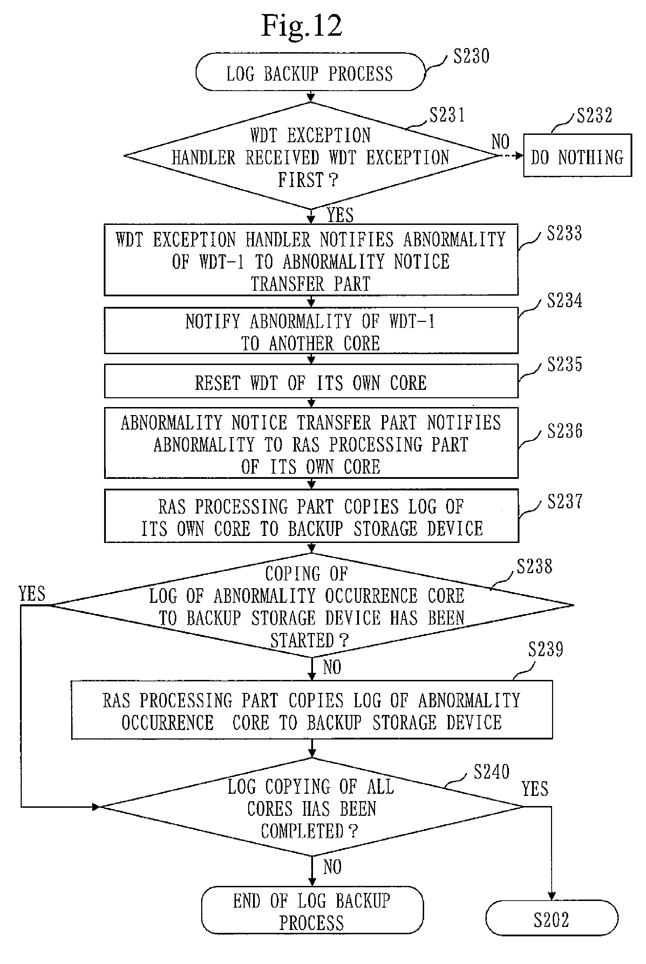

An operation (S230: log backup process) of the core 2 (217) which is the first that received WDT exception will be described with reference to Fig. 12.

In S213, in this example, since a WDT exception handler 214 of the core 2 (217) is the first to accept WDT exception, the process is forwarded to S233. The WDT exception handler 214 notifies the abnormality of the WDT-1 (220) to the abnormality notice transfer part 255 of its own core (an arrow from 214 to 255 in Fig. 9).

In S234, the abnormality notice transfer part 255 notifies exception occurrence of the WDT-1 (220) to the abnormality notice transfer parts 254 and 256 of other cores (two arrows; an arrow from 255 to 254 and an arrow from 255 to 256 in Fig. 9).

The operations of the core 1 and the core N after receiving the exception occurrence will be described later.

In S235, a RAS processing part 2 (208) resets the WDT-2 (221) of its own core (arrows from 208 to 221 via 211 in Fig. 9).

This process aims to prevent WDT timeout from occurring in a core other than the abnormality occurrence core during the RAS process which is carried out based on reception of an exception occurrence notice by the WDT-1 (220).

In S236, the abnormality notice transfer part 255 notifies an abnormality to the RAS processing part 2 (208) of its own core (an arrow from 255 to 208 in Fig. 9).

In S237, the RAS processing part 2 (208) copies the log of its own core to the backup storage device 226 (arrows from 208 to 227 and 230 in Fig. 9).

In S238, the RAS processing part 2 (208) checks whether or not copying of the log of the abnormality occurrence core has been started. If copying has not been started yet, then in S239, the RAS processing part 2 (208) copies the log of the abnormality occurrence core to the backup storage device 226 (substitutionally practiced along an arrow from 226 to 229 in Fig. 9 by the RAS processing part 2 (208) of the core 2).

Hence, the RAS processing part of a core other than the abnormality occurrence core can substitutionally copy the log of the abnormality occurrence core to the backup storage device 226.

In S240, the RAS processing part 2 (208) checks whether or not log copying of all the cores has been completed. If there is any core log copying of which has not been completed yet, the process of the RAS processing part 2 (208) completes.

If log copying of all the cores has been completed in S240, the RAS processing part 2 (108) calls the board reset process of S102 (Fig. 9 shows an example in which the core N calls this process; an arrow from 209 to 224).

The process of the core 1 (216) notified of the abnormality of the WDT-1 (220) by the process of S234 of Fig. 12 will be described with reference to Fig. 11.

In S226, if the abnormality notice transfer part 254 of the core 1 does not operate normally, the RAS processing part 1 (207) of the abnormality occurrence core (core 1) does not operate.

If the abnormality notice transfer part 254 operates normally, the processes of S227 to 229 and of S280 are carried out.

S227 is the same as S236, S228 is the same as S238, S229 is the same as S237, and S280 is the same as S240.

Therefore, explanation on the respective steps will accordingly be omitted.

If the WDT exception handler 213 of the core 1 (216) is the first that received WDT exception, YES is obtained in S223. Then, as shown in S225, processes of S233 and S234 of Fig. 12 are carried out.

After that, the processes subsequent to S227 are carried out.

The process of the core N (218) notified of the abnormality of the WDT-1 (220) by the process of S234 of Fig. 12 will be described with reference to Fig. 13.

In S254, the abnormality notice transfer part 256 receives an abnormality notice of the WDT-1 (220).

After this, the processes of S255 to S260 are carried out.

Note that S255 to S260 are the same as S235 to S240 of Fig. 12.

The explanation of the respective steps will accordingly be omitted.

If a WDT exception handler 215 of the core N (218) is the first that acquired WDT exception, YES is obtained in S215, and the processes of S233 and S234 of Fig. 12 are carried out as indicated in S253.

After that, the processes subsequent to S255 are carried out.

### [Embodiment 2: Effect]

With the method of Embodiment 1, since abnormality is notified to the respective cores sequentially, a delay occurs in exception notification. In contrast, in the method of Embodiment 2, since abnormality is notified to the respective cores simultaneously, such delay does not occur, and simultaneous parallel processing by the RAS processing parts can be completed sooner, which is effective.

Except for this, the effect of Embodiment 2 is the same as that of Embodiment 1.

### Reference Signs List

100: CPU board; 101: periodic processing APP-1; 102: periodic processing APP-2; 103: periodic processing APP-N; 104: OS-1; 105: OS-2; 106; OS-N; 107: RAS processing part 1; 108: RAS processing part 2; 109: RAS processing part N; 110: WDT driver; 111: WDT driver; 112: WDT driver; 113: WDT exception handler; 114: WDT exception handler; 115: WDT exception handler; 116: core 1; 117: core 2; 118: core N; 119: interrupt controller; 120: WDT-1; 121: WDT-2; 122: WDT-N; 123: delay device; 124: board reset device; 125: memory; 126: backup storage device; 200: CPU board; 201: periodic processing APP-1; 202: periodic processing APP-2; 203: periodic processing APP-N; 204: OS-1; 205: OS-2; 206: OS-N; 207: RAS processing part 1; 208: RAS processing part 2; 209: RAS processing part N; 210: WDT driver; 211: WDT driver; 212: WDT driver; 213: WDT exception handler; 214: WDT exception handler; 215: WDT exception handler; 216: core 1; 217: core 2; 218: core N; 219: interrupt controller; 220: WDT-1; 221: WDT-2; 222: WDT-N; 223: delay device; 224: board reset device; 225: memory; 226: backup storage device; 250: hypervisor; 251: hypervisor 1; 252: hypervisor 2; 253: hypervisor N; 254: abnormality notice transfer part; 255: abnormality notice transfer part; 256: abnormality notice transfer part

## Claims

1. A processor system comprising:
a plurality of processor units;
a first storage device which stores log information of each processor unit; and
a second storage device which is different from the first storage device,
wherein each processor unit writes log information of the processor unit, being stored in the first storage device into the second storage device when an abnormality occurs in any of the processor units.

2. The processor system according to claim 1,
wherein each processor unit writes the log information of the processor unit into the second storage device even if no abnormality occurs in the processor unit.

3. The processor system according to claim 1,
wherein each processor unit, when an abnormality occurs in another processor unit, checks whether or not writing of log information, being stored in the first storage device, of an abnormality occurrence processor unit in which the abnormality occurs, into the second storage device has been started, and
if writing of the log information of the abnormality occurrence processor unit into the second storage device has not been started yet, each processor writes the log information of the abnormality occurrence processor unit, being stored in the first storage device into the second storage device.

4. The processor system according to claim 1, further comprising
an abnormality occurrence notification device which, when an abnormality occurs in any of the processor units, notifies the occurrence of the abnormality to each processor unit by round robin,
wherein each processor unit, upon being notified of the occurrence of the abnormality by the abnormality occurrence notification device, writes the log information of the processor unit into the second storage device.

5. The processor system according to claim 1, further comprising
an abnormality occurrence notification device which, when an abnormality occurs in any of the processor units, notifies the occurrence of the abnormality to each processor unit by multicast,
wherein each processor unit, when having acquired a notice from the abnormality occurrence notification device first in the plurality of processor units, notifies the occurrence of the abnormality to another processor unit and writes the log information of the processor unit into the second storage device.

6. The processor system according to claim 5,
wherein each processor unit, when having been notified of the occurrence of the abnormality in any of the processor units by another processor unit, writes the log information of the processor unit into the second storage device.

7. A processor system comprising:
a plurality of processor units;
a first storage device which stores log information of each processor unit; and
a second storage device into which, when an abnormality occurs in any of the processor units, the log information stored in the first storage is written,
wherein each processor unit, when an abnormality occurs in another processor unit, checks whether or not writing of log information, being stored in the first storage device, of an abnormality occurrence processor unit in which the abnormality occurs, into the second storage device has been started, and
if writing of the log information of the abnormality occurrence processor unit into the second storage device has not been started yet, each processor unit writes the log information of the abnormality occurrence processor unit, being stored in the first storage device into the second storage device.
